(19) Europäisches Patentamt
European Patent Office
Office européen des brevets

(11) **EP 4 200 580 B1**

(12) **FASCICULE DE BREVET EUROPEEN**

(45) Date de publication et mention
de la délivrance du brevet:
**04.03.2026 Bulletin 2026/10**

(21) Numéro de dépôt: **21769767.1**

(22) Date de dépôt: **16.08.2021**

(51) Classification Internationale des Brevets (IPC):
**G01D 3/08** $^{(2006.01)}$

(52) Classification Coopérative des Brevets (CPC):
**G01D 3/08**

(86) Numéro de dépôt international:
**PCT/FR2021/051469**

(87) Numéro de publication internationale:
**WO 2022/043629 (03.03.2022 Gazette 2022/09)**

(54) **PROCEDE DE DETERMINATION DE PANNE POUR UN ENSEMBLE DE CAPTEURS**

VERFAHREN ZUR BESTIMMUNG EINES FEHLERS FÜR EINEN SATZ VON SENSOREN

METHOD FOR DETERMINING A FAULT FOR A SET OF SENSORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.08.2020 FR 2008635**

(43) Date de publication de la demande:
**28.06.2023 Bulletin 2023/26**

(73) Titulaire: **ArianeGroup SAS
78130 Les Mureaux (FR)**

(72) Inventeurs:
• **LE GONIDEC, Serge
27207 VERNON CEDEX (FR)**
• **REMY, Antoine
27207 VERNON CEDEX (FR)**
• **TREANGLE, Clément
27207 VERNON CEDEX (FR)**

(74) Mandataire: **Cabinet Beau de Loménie
103, rue de Grenelle
75340 Paris Cedex 07 (FR)**

(56) Documents cités:
**FR-A1- 3 013 834      US-A1- 2015 233 730**

## Description

Domaine technique

Le présent exposé concerne le domaine de la validation de données acquises sur un système par des capteurs, et plus particulièrement un procédé de détermination de panne pour un ensemble de capteurs. Un tel procédé trouve son application dans de nombreux domaines industriels, par exemple la surveillance en temps réel ou en différé de systèmes aéronautiques ou spatiaux.

Technique antérieure

Un système physique peut être surveillé par des capteurs afin de fournir des informations sur son fonctionnement, par exemple dans le but d'améliorer sa fiabilité ou de détecter des dysfonctionnements du système. Lorsque le système en question est un système critique, tel que la régulation d'un moteur-fusée en vol, il est possible de prévoir une redondance matérielle des capteurs : plusieurs capteurs acquièrent la même donnée ou des données proches, afin qu'en cas de défaillance de l'un d'entre eux, il soit toujours possible de surveiller précisément et efficacement le système sans compromettre l'exploitation. Par ailleurs, les documents US 2015/233730 et FR 3 013 834 décrivent des procédés de fusion de données de capteurs.

Une redondance matérielle est néanmoins pénalisante, notamment en ce qui concerne le coût des capteurs et de leur maintenance, pour la réalisation d'une fonction donnée. Inversement, réduire la redondance matérielle pose la question de la fiabilité associée à la validité des mesures restantes : si une donnée n'est renvoyée que par un seul capteur, comment s'assurer que cette donnée est fiable ?

Il existe donc un besoin pour un nouveau type de procédé de détermination de panne pour un ensemble de capteurs.

Exposé de l'invention

A cet effet, le présent exposé concerne un procédé de détermination de panne pour un ensemble de capteurs selon la revendication 1.

Un ensemble de capteurs comprend plusieurs capteurs (au moins deux, voire au moins trois) et le procédé vise à déterminer s'il existe une panne sur au moins un de ces capteurs. Les capteurs renvoient des mesures prises sur le système physique surveillé (ci-après le système). Les capteurs sont de préférence montés pour surveiller un même système.

Parallèlement, le système est aussi surveillé par une pluralité d'estimateurs (au moins deux estimateurs, voire au moins trois). Un estimateur détermine (fournit en sortie) une estimation d'une grandeur physique du système considéré. Un estimateur prend en entrée un signal électronique (par exemple informatique ou logique), alors qu'un capteur prend en entrée directement un phénomène physique. Chaque estimateur peut prendre en entrée une ou plusieurs mesures renvoyées par les capteurs, directement ou indirectement : par exemple, un premier estimateur peut prendre en entrée trois mesures ; un deuxième estimateur peut prendre en entrée une mesure et l'estimation fournie par le premier estimateur, qui repose elle-même sur trois mesures : on considère alors que le deuxième estimateur prend en entrée, *in fine,* un sous-ensemble formé par ladite mesure et lesdites trois mesures (ladite mesure étant éventuellement confondue avec l'une desdites trois mesures).

Au sens du présent exposé et sauf indication contraire, la mention d'un « premier » élément, tel qu'un premier estimateur, n'implique pas nécessairement l'existence d'un « deuxième » élément ni, le cas échéant, de relation d'ordre entre le premier et le deuxième élément. Les qualificatifs ordinaux sont, dans ce contexte, employés à des seules fins de clarté et d'identification, sans préjuger de caractéristiques particulières. De même, et réciproquement, la mention d'un élément de rang plus élevé (troisième, etc.) **n'implique** nullement que des éléments de rang moins élevés, tel qu'un éventuel deuxième élément, existent et/ou possèdent les caractéristiques qui auront pu être présentées par ailleurs.

Certains estimateurs peuvent prendre en entrée les mêmes sous-ensembles de mesures. Par exemple, il peut être prévu un troisième estimateur prenant en entrée l'estimation fournie par le deuxième estimateur. Au final, les informations de base prises en compte par le troisième estimateur seront donc les mêmes que celles prises en compte par le deuxième estimateur. Néanmoins, parmi les estimateurs considérés, il en existe une pluralité qui prend en entrée des sous-ensembles différents des mesures : chaque estimateur de cette pluralité prend en entrée, directement ou indirectement, un sous-ensemble de mesures qui diffère du sous-ensemble de mesures pris en entrée par les autres estimateurs. Deux sous-ensembles diffèrent si leur intersection n'est pas égale à leur réunion. Le terme « sous-ensemble » est à comprendre au sens large, au sens où un estimateur peut prendre en entrée l'ensemble des mesures, c'est-à-dire toutes les mesures renvoyées par tous les capteurs.

Dans la suite, par souci de concision, on considérera qu'un estimateur permet de déterminer une estimation.

Toutefois, cela n'exclut pas les cas où un estimateur fournit plusieurs estimations, par exemple de grandeurs physiques différentes mais optionnellement liées entre elles.

Au moins un des estimateurs comprend un réseau de neurones artificiels. Un réseau de neurones artificiels (RNA) est un modèle de calcul comportant un ou plusieurs neurones, chaque neurone étant doté d'une fonction de transfert. Le RNA possède donc une fonction de transfert globale permettant de calculer au moins une sortie en fonction d'au moins une entrée. Les fonctions de transfert de chaque neurone ou les poids relatifs des neurones dans le réseau peuvent être pondérés par des coefficients appelés poids synaptiques (ou simplement poids) et biais. Les poids peuvent être modulés en fonction d'un apprentissage du RNA. Sur le principe, l'apprentissage consiste à fournir au RNA un ensemble de situations dans lesquelles les entrées et les sorties (ou cibles de sorties) sont connues. Au cours de l'apprentissage, le RNA adapte ses poids synaptiques et biais pour qu'ils soient conformes aux situations apprises, éventuellement avec une certaine tolérance. Les RNA sont donc un exemple d'expressions mathématiques dont les coefficients sont adaptés itérativement en fonction de l'apprentissage. Les poids et biais, une fois **déterminés** à l'issue de la phase d'apprentissage, peuvent ensuite rester constants ou non pendant la phase d'exploitation. Typiquement, l'apprentissage peut être effectué au moins préalablement à la mise en œuvre du procédé de détermination de panne, et éventuellement concomitamment.

Le RNA est donc capable de modéliser intelligemment un lien entre des grandeurs physiques en apprenant à partir du comportement réel desdites grandeurs dans le système, sans nécessiter de connaître les lois théoriques qui le gouvernent. Par suite, le RNA n'est pas nécessairement contraint par les liens de causalité qui relient les différentes grandeurs physiques les unes aux autres. Ainsi, par exemple, un débit est la conséquence physique d'une différence entre une pression d'entrée et une pression de sortie. Dans un système quasi-statique, un RNA sera capable, à la différence d'un modèle classique bâti sur les lois de la physique (ci-après « modèle physique » ou « modèle multiphysique »), de déterminer, à la suite d'un apprentissage, la pression amont en fonction de la pression aval et du débit. En d'autres termes, un RNA est capable d'échanger les entrées et les sorties par rapport à des modèles physiques ou multiphysiques classiques. On parle alors de relations inverses.

Le RNA possède, de plus, une capacité de généralisation (aussi appelée « inférence »), c'est-à-dire qu'il est capable de déterminer les valeurs de sortie d'une situation dont on lui donne les données d'entrée même si cette situation n'a pas été apprise pendant la phase d'apprentissage, à condition que les entrées soient contenues dans un domaine de validité (en d'autres termes, on s'assure que les valeurs des entrées de la situation à calculer sont comprises entre ou proches des valeurs d'entrée extrêmes qui ont servi pour l'apprentissage). Ceci est particulièrement utile pour des systèmes présentant une large gamme de points de fonctionnement et pour lesquels il est industriellement inenvisageable de paramétrer explicitement toutes les situations possibles. Pour une meilleure précision, on doit vérifier que les situations d'apprentissages constituent un maillage suffisamment raffiné du domaine de fonctionnement. En outre, le RNA est un système aisément modulable. Ces avantages sont également valables dans le cas d'autres types d'expressions mathématiques à coefficients évalués itérativement.

De plus, un RNA entraîné est généralement plus rapide à fournir une estimation qu'un modèle physique ou multiphysique, notamment lorsque le modèle est non linéaire. Ceci est particulièrement avantageux pour des **applications** du procédé en temps réel, la construction et/ou l'entraînement du RNA pouvant être réalisés préalablement. Enfin, un RNA n'ayant pas de restriction interne dictée par la physique, il s'accommode bien de systèmes dits « hybrides », mélangeant des grandeurs continues et des grandeurs discrètes.

Grâce aux capteurs et aux estimateurs, pour au moins une grandeur physique du système, il existe au moins deux données obtenues différemment : soit par plusieurs capteurs, soit par plusieurs estimateurs, soit par une combinaison d'au moins un capteur et au moins un estimateur. Pour au moins certaines grandeurs physiques, les données sont obtenues en tout ou partie par des estimateurs, ce qui assure une redondance logicielle et permet un gain de coûts par rapport à une redondance purement matérielle.

Pour une grandeur physique donnée, pour laquelle au moins deux données ont été obtenues, le procédé comprend le calcul de résidus représentatifs de l'écart entre des données représentant cette grandeur physique. Par exemple, on prend des données représentant cette grandeur physique, et on calcule, en tant que résidus, les écarts qui séparent ces données prises deux à deux. L'écart peut être une simple différence scalaire ou plus généralement une distance dans un espace approprié.

La détermination qu'il existe une panne sur au moins l'un des capteurs peut être réalisée au moyen d'une fonction de transfert prenant en entrée des résidus, optionnellement tous les résidus, et retournant, en sortie, un indicateur de panne pour au moins un capteur ayant renvoyé une mesure sur laquelle les résidus sont basés au moins en partie. La panne est donc déterminée à partir de résidus, eux-mêmes calculés à partir de données, elles-mêmes étant des mesures, ou des estimations déterminées à partir de mesures, les mesures elles-mêmes étant renvoyées par des capteurs ; une éventuelle panne est alors déterminée pour l'un de ces capteurs. A contrario, avec ce procédé, une panne ne peut pas être identifiée pour des capteurs n'ayant fourni aucune mesure aboutissant au calcul des résidus.

La fonction de transfert peut être, par exemple, une matrice, notamment déterminée analytiquement ou numériquement, un ou plusieurs RNA, ou autre.

Le fait que les estimateurs prennent en entrée des sous-ensembles différents desdites mesures permet que les résidus soient représentatifs d'écarts entre des données issues de mesures différentes, de sorte que l'examen des résidus permette de remonter à la mesure erronée et donc au capteur en panne. En outre, le fait qu'au moins un estimateur comprenne un RNA apporte plus de robustesse pour la détermination des résidus. Ainsi, le présent procédé de détermination de panne permet d'utiliser une redondance au moins en partie logicielle, avec les gains de coût et de masse associés, tout en offrant une évaluation robuste de la validité des données obtenues.

De plus, au moins certains des résidus sont représentatifs de l'écart entre une mesure et une estimation, ou entre deux estimations. Cela assure une redondance logicielle.

Dans certains modes de réalisation, le calcul de résidus est effectué entre tous les couples de données représentant une même grandeur physique. Par exemple, on prend toutes les données représentant une même grandeur physique et on apparie ces données deux à deux pour former tous les couples possibles. Ainsi, avec trois données représentant une même grandeur, on aura trois couples (1, 2), (2, 3) et (1, 3). Puis le calcul de résidus peut être effectué pour chaque couple, par exemple par différence entre les deux données du couple.

Dans certains modes de réalisation, l'ensemble de capteurs comprend au plus un capteur par grandeur physique. Cela évite la redondance matérielle et augmente encore les gains de coût et de masse.

Dans certains modes de réalisation, la pluralité d'estimateurs comprend au moins un estimateur pour fournir une estimation d'une grandeur physique mesurée par l'un des capteurs. Il existe donc une redondance logicielle entre ledit capteur et ledit estimateur. De préférence, ledit estimateur ne prend pas en entrée la mesure renvoyée par ledit capteur. Plus généralement, ledit estimateur peut prendre en entrée des mesures autres que la mesure renvoyée par ledit capteur. La détection de panne est rendue plus précise par l'exploitation des liens entre différentes mesures au sein du même système physique surveillé.

Dans certains modes de réalisation, le réseau de neurones artificiels est configuré pour déterminer une estimation d'une première grandeur physique intervenant en amont d'au moins une deuxième grandeur physique dont la mesure est prise comme entrée par le réseau de neurones artificiels.

Comme expliqué précédemment, il peut exister un lien physique de cause à effet entre la première grandeur (cause) et la deuxième grandeur (effet), ce en quoi la première grandeur est dite en amont de la deuxième grandeur : la deuxième grandeur physique est normalement une conséquence de la première grandeur physique. Le RNA est basé sur une relation inverse lui permettant de prendre en entrée l'effet (la deuxième grandeur) et de déterminer, en sortie, une estimation de la cause (première grandeur). Une telle détermination, impossible avec un modèle multiphysique, augmente la flexibilité pour la détermination des résidus et donc, au final, la fiabilité de la détection de panne.

Dans certains modes de réalisation, dans la détermination qu'il existe une panne, les résidus sont donnés en entrée à au moins un réseau de neurones artificiels configuré pour renvoyer, pour au moins un des capteurs, un indicateur de l'existence et optionnellement de la gravité d'une panne sur ledit capteur.

Dans ces modes de réalisation, la fonction de transfert mentionnée précédemment comprend un RNA prenant en entrée les résidus et renvoyant, en sortie, au moins un indicateur de panne. Le RNA peut renvoyer un indicateur par capteur et/ou un indicateur par panne, ou bien un indicateur unique pour tous les capteurs et toutes les pannes (par exemple un nombre dont chaque chiffre se réfère à un capteur donné), ou encore toute situation intermédiaire. De même, l'existence et la gravité d'une panne peuvent être reflétées par le même indicateur (par exemple : 0 pour une absence de panne et un nombre positif pour une présence de panne, croissant en fonction de la gravité) ou par des indicateurs différents, ou encore toute situation intermédiaire.

Le présent exposé concerne également un système de détermination de panne pour un ensemble de capteurs selon la revendication 8.

Ce système de détermination de panne peut être apte à la mise en œuvre du procédé de détection de panne tel que décrit précédemment.

Dans certains modes de réalisation, les différentes étapes du procédé de détermination de panne sont déterminées par des instructions de programmes d'ordinateur.

En conséquence, le présent exposé vise aussi un programme sur un support d'informations, ce programme étant susceptible d'être mis en œuvre dans un système de détermination de panne ou plus généralement dans un ordinateur, ce programme comportant des instructions adaptées à la mise en œuvre des étapes d'un procédé de détermination de panne tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le présent exposé vise aussi un support d'informations lisible par un ordinateur ou par un microprocesseur, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon le présent exposé peut être en particulier téléchargé sur un réseau de type Internet.

Le présent exposé concerne également un procédé d'estimation d'une grandeur physique à partir d'un ensemble de capteurs, comprenant la détermination de panne pour ledit ensemble de capteurs selon l'un quelconque des modes de réalisation précédemment décrits, et la production d'une estimation de la grandeur physique à partir des capteurs mesurant ladite grandeur physique et des estimateurs déterminant une estimation de ladite grandeur physique, en ignorant les capteurs défectueux pour lesquels l'existence d'une panne a été déterminée, et les estimateurs prenant en entrée des mesures renvoyées par lesdits capteurs défectueux. En ignorant les capteurs défectueux et les estimateurs basés, directement ou indirectement, sur ces capteurs, l'estimation de la grandeur physique peut se faire sur la base de données fiables. La redondance peut être structurée de sorte qu'il existe toujours des données fiables restantes même en cas de défaillance d'un certain nombre de capteurs, ce nombre pouvant être dimensionné en fonction des besoins et de la criticité du système surveillé.

Le présent exposé concerne également un procédé d'apprentissage d'un réseau de neurones artificiels pour un système de détermination de panne pour un ensemble de capteurs selon la revendication 9.

Après apprentissage, le réseau de neurones artificiels peut être utilisé pour la détermination qu'il existe une panne sur au moins un des capteurs dans un procédé ou le système de détermination de panne selon l'un quelconque des modes de réalisation précédemment décrits.

Le principe du procédé d'apprentissage est de générer une base d'apprentissage comprenant des données sur lesquelles on a introduit des erreurs connues - les défauts - et d'effectuer l'apprentissage du RNA en prenant comme entrée les résidus calculés à partir de ces données et comme cible de sortie les indicateurs de panne établis pour correspondre aux erreurs connues introduites. A partir de mêmes données représentant une pluralité de mesures, il est possible de créer une base d'apprentissage comprenant différents exemplaires des données, en générant des défauts différant, entre les exemplaires, par leur intensité, par le ou les capteurs sur lesquels ils portent, etc. Ainsi, un défaut peut être caractérisé par au moins un capteur et au moins une amplitude. Les capteurs et amplitudes peuvent être optionnellement sélectionnés les uns et/ou les autres aléatoirement pour générer facilement une grande base d'apprentissage.

Les estimations sont déterminées par les estimateurs après génération des défauts, afin qu'elles prennent en compte les défauts de manière cohérente avec les mesures, comme ce qui se passerait sur un système physique réel en cas de défaillance d'un capteur.

L'apprentissage *stricto sensu* du RNA, étant donné une entrée (un premier ensemble de données) et une cible de sortie (un deuxième ensemble de données), est une opération connue en elle-même de l'homme du métier, utilisant par exemple une fonction de perte dont l'objet est de faire converger l'estimation (troisième ensemble de données), fournie par le RNA sur la base du premier ensemble de données, vers le deuxième ensemble de données.

Dans certains modes de réalisation, la génération d'un indicateur de panne comprend la comparaison du défaut correspondant avec un seuil associé au capteur renvoyant la mesure considérée, et l'émission d'un niveau de gravité de panne pour ledit capteur sur la base de ladite comparaison. Le défaut correspondant est le défaut introduit sur la mesure considérée et pour lequel l'indicateur de panne a été généré.

Par exemple, la panne peut être considérée comme plus grave si le défaut dépasse un certain seuil, par exemple en termes d'amplitude de la grandeur physique mesurée. Il est aussi possible de prévoir plusieurs seuils successifs, la panne pouvant être considérée comme d'autant plus grave que le nombre de seuils franchis est grand.

Brève description des dessins

D'autres caractéristiques et avantages de l'objet du présent exposé ressortiront de la description suivante de modes de réalisation, donnés à titre d'exemples non limitatifs, en référence aux figures annexées.

[Fig. 1] La figure 1 représente schématiquement un système de détection de panne pour un ensemble de capteurs, selon un mode de réalisation.

[Fig. 2] La figure 2 représente schématiquement un procédé d'apprentissage d'un réseau de neurones artificiels pour un système de détermination de panne pour un ensemble de capteurs, selon un mode de réalisation.

Description détaillée

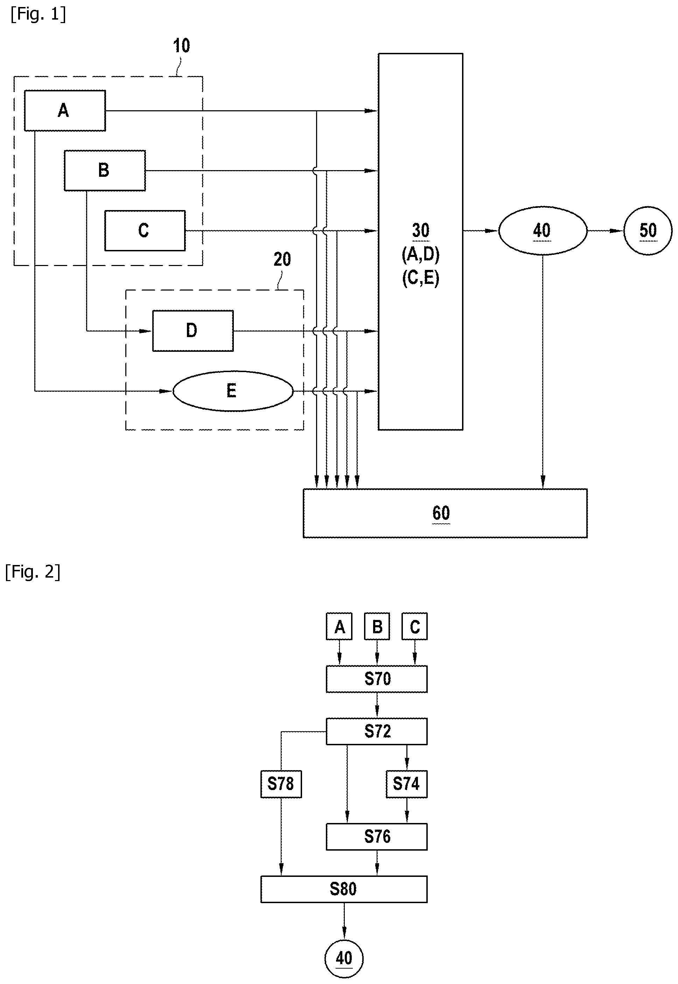

Un procédé de détermination de panne pour un ensemble de capteurs va être décrit en référence à la figure 1. Dans cet exemple, un ensemble de capteurs 10 comprend trois capteurs A, B, C. Toutefois, un nombre quelconque de capteurs, de préférence supérieur ou égal à deux, pourrait être prévu dans l'ensemble de capteurs 10. L'ensemble de capteurs 10 est destiné à être monté sur un système physique à surveiller, non illustré, par exemple un moteur-fusée. Les grandeurs physiques à surveiller dans le système et les types de capteurs appropriés pour ce faire peuvent être choisis par l'homme du métier connaissant le système considéré, en fonction de ses besoins de surveillance. Dans le cas d'un moteur-fusée, les grandeurs considérées peuvent être choisies parmi une pression, un débit, une température, notamment de fluide ou d'un composant solide, une vitesse de rotation, une position de vanne, une vibration, etc.

En l'occurrence, un premier capteur A est configuré pour mesurer une première grandeur physique Y1. Le premier capteur A renvoie une mesure XA, qui est égale à la somme de la première grandeur Y1 et d'un biais de mesure ZA : XA=Y1+ZA.

Un deuxième capteur B est configuré pour mesurer une deuxième grandeur physique Y2. Le deuxième capteur B renvoie une mesure XB, qui est égale à la somme de la deuxième grandeur Y2 et d'un biais de mesure ZB : XB=Y2+ZB.

Un troisième capteur C est configuré pour mesurer une troisième grandeur physique Y3. Le troisième capteur C renvoie une mesure XC, qui est égale à la somme de la troisième grandeur Y3 et d'un biais de mesure ZC :

$$XC=Y3+ZC.$$

Dans cet exemple, les grandeurs Y1, Y2, Y3 sont supposées différentes, mais il est possible de prévoir plusieurs capteurs mesurant une même grandeur (éventuellement à un décalage négligeable près).

Les grandeurs Y1, Y2, Y3 étant différentes, l'ensemble de capteurs comprend, dans cet exemple, au plus un capteur par grandeur physique. Ainsi, ce mode de réalisation est dépourvu de redondance matérielle.

Dans cet exemple, on considère que la troisième grandeur Y3 est une grandeur physique intervenant en amont de la première grandeur Y1 : ainsi, compte tenu des lois physiques régissant le système, la première grandeur Y1 est une conséquence de la troisième grandeur Y3. Par exemple, la troisième grandeur Y3 peut être une pression dans un réservoir d'ergol, et la première grandeur Y1 peut être un débit dans une conduite partant de ce réservoir d'ergol.

Les mesures XA, XB, XC peuvent être ponctuelles, éventuellement répétées dans le temps, ou s'étendre sur une certaine durée.

Par ailleurs, une pluralité d'estimateurs 20 peut être prévue, en complément de l'ensemble de capteurs 10, pour surveiller le système. En l'occurrence, la pluralité d'estimateurs 20 comprend deux estimateurs D, E. Toutefois, un nombre quelconque d'estimateurs, de préférence supérieur ou égal à deux, pourrait être prévu dans la pluralité d'estimateurs 20. Les grandeurs physiques à estimer dans le système et les estimateurs appropriés pour ce faire peuvent être choisis par l'homme du métier connaissant le système considéré, en fonction de ses besoins de surveillance.

En l'occurrence, un premier estimateur D est configuré pour déterminer une estimation XD de la première grandeur physique Y1, qui est égale à la somme de la première grandeur Y1 et d'un biais d'estimation ZD : XD=Y1+ZD. Dans ce mode de réalisation, le premier estimateur D peut être un modèle physique, linéaire ou non, ou tout autre estimateur approprié. Pour déterminer l'estimation XD, le premier estimateur D prend en entrée un sous-ensemble des mesures renvoyées par les capteurs, en l'occurrence la mesure XB renvoyée par le deuxième capteur B. Toutefois, l'estimation XD pourrait être déterminée sur la base de plus d'une mesure.

Un deuxième estimateur E est configuré pour déterminer une estimation XE de la troisième grandeur physique Y3, qui est égale à la somme de la troisième grandeur Y3 et d'un biais d'estimation ZE : XE=Y3+ZE. Dans ce mode de réalisation, le deuxième estimateur E comprend un RNA. Par exemple, le RNA peut comprendre une ou plusieurs couches, notamment d'une structure appelée Feedforward Network (FF ou FFNN) ou Multi-Layer Perceptron (MLP). Le RNA peut être entraîné sur la base de données issues de modèles physiques et/ou de données d'essais. Pour déterminer l'estimation XE, le deuxième estimateur E prend en entrée un sous-ensemble des mesures renvoyées par les capteurs, en l'occurrence la mesure XA renvoyée par le premier capteur A. De même que l'estimation XD, l'estimation XE pourrait être déterminée sur la base de plus d'une mesure. Inversement, le deuxième estimateur E et particulièrement son RNA pourrait renvoyer plus d'une estimation, c'est-à-dire avoir plusieurs sorties.

Ainsi, les estimateurs D et E prennent en entrée des sous-ensembles différents des mesures XA, XB, XC renvoyées par les capteurs A, B, C.

Par ailleurs, la pluralité d'estimateurs 20 comprend donc au moins un estimateur, ici deux estimateurs D et E, pour fournir une estimation d'une grandeur physique mesurée par l'un des capteurs, en l'espèce de la première grandeur Y1 mesurée par le premier capteur A et de la troisième grandeur Y3 mesurée par le troisième capteur C, respectivement.

Cet exemple est uniquement illustratif, les types d'estimateurs pouvant être adaptés selon les besoins de l'homme du métier compte tenu du présent exposé. Par exemple, les estimateurs peuvent tous comprendre des RNA, ou bien seulement certains d'entre eux, dès lors qu'au moins un des estimateurs comprend un RNA.

On note que l'estimateur E, prenant en entrée la mesure XA et déterminant l'estimation XE, est tel que le RNA qu'il comprend est configuré pour déterminer l'estimation XE d'une grandeur physique Y3 intervenant en amont de la grandeur physique Y1 dont la mesure XA est prise comme entrée par le RNA. Ainsi, l'estimateur E, et plus particulièrement son RNA, est configuré pour déterminer une estimation selon une relation inverse.

Ceci peut être particulièrement utile pour déterminer des estimations de grandeurs pour lesquelles une redondance exacte n'est pas possible. Par exemple, une vitesse de rotation (résultante des efforts), est la résultante de la présence de couples (composés de pression, température, débit) appliqués sur la turbine et la pompe (efforts en entrée). Il est possible de remonter à la pression à l'entrée de la turbine, connaissant la vitesse et la pression en sortie de la pompe.

On appelle données l'ensemble formé par les mesures XA, XB, XC et les estimations XD, XE. Dans ce mode de réalisation, les données présentent une redondance pour la première grandeur Y1, évaluée grâce à la mesure XA et l'estimation XD, et pour la troisième grandeur Y3, évaluée grâce à la mesure XC et l'estimation XE. En revanche, la deuxième grandeur Y2 n'est l'objet d'aucune redondance, n'étant que mesurée par le deuxième capteur B.

Sur la base de ces données, des résidus sont calculés (bloc fonctionnel 30). Les résidus sont représentatifs de l'écart entre des données représentant une même grandeur physique. Par exemple, la première grandeur Y1 est représentée par les données XA (mesure) et XD (estimation). Un résidu R1 relatif à la première grandeur Y1 peut être calculé comme la différence entre XA et XD :

$$R1(A,D)=XA-XD=(Y1+ZA)-(Y1+ZD)=ZA-ZD$$

Ainsi, dans cet exemple, le résidu est égal à la différence des biais de mesure ou d'estimation. En fonctionnement normal, cette différence devrait être très petite, notamment par rapport à Y1. Si le résidu R1 dépasse un certain seuil, alors il existe une défaillance sur le premier capteur A et/ou le premier estimateur D, dont le biais est trop important.

Plutôt qu'une simple différence scalaire, un autre type d'écart peut être calculé comme résidu, en fonction de la nature de la mesure XA et de l'estimation XD. Par exemple, dans le cas de signaux temporels, l'écart peut être représenté par l'intégrale de la valeur absolue ou du carré de la différence entre les deux signaux. D'autres écarts appropriés, notamment une distance dans un espace adéquat, peuvent être mis au point par l'homme du métier.

Le résidu R1(A,D) est représentatif de l'écart entre une mesure XA et une estimation XD. Si d'autres capteurs F et/ou d'autres estimateurs G renvoyaient une mesure ou une estimation de la grandeur Y1, il serait possible de calculer d'autres résidus, par exemple en prenant les données deux à deux : R1(A,F), R1(A,G), R1(D,F), R1(D,G), R1(F,G). Ainsi, on obtiendrait des résidus représentatifs de l'écart entre deux mesures (XA et XF), entre une mesure et une estimation (XA et XD, XA et XG, XF et XD, XF et XG), ou encore entre deux estimations (XD et XG). Optionnellement, le calcul de résidus peut donc être effectué entre tous les couples de données représentant une même grandeur physique, en l'occurrence Y1.

Si la détection de panne ne vise que le ou les capteurs directement ou indirectement relatifs à la grandeur Y1, il n'est pas utile de calculer les résidus relatifs à d'autres grandeurs. Toutefois, dans le cas présent, on effectue une détection plus globale, de sorte qu'on calcule également le résidu R3 relatif à la troisième grandeur Y3. Ainsi, de manière analogue : R3(C,E)=ZC-ZE.

Sur la base des résidus ainsi calculés, il est effectué une détermination 40 qu'il existe une panne sur au moins un des capteurs A, B, C en fonction des résidus R1(A,D), R3(C,E) calculés sur la base de données obtenues à partir de mesures renvoyées par ledit capteur. On rappelle que le premier estimateur D prend en entrée la mesure XB ; ainsi, le résidu R1(A,D) est calculé sur la base de données obtenues à partir des mesures XA et XB renvoyées par les capteurs A et B. De même, le deuxième estimateur E prend en entrée la mesure XA ; ainsi, le résidu R3(C,E) est calculé sur la base de données obtenues à partir des mesures XA et XC renvoyées par les capteurs A et C.

On comprend ainsi que si seul le résidu R1 dépasse un seuil, tandis que le résidu R3 n'en dépasse pas, alors on peut raisonnablement conclure que le deuxième capteur B est défectueux. Si seul le résidu R3 dépasse un seuil, tandis que le résidu R1 n'en dépasse pas, alors on peut raisonnablement conclure que le troisième capteur C est défectueux. Si les deux résidus R1 et R3 dépassent des seuils, alors on peut raisonnablement conclure que le premier capteur A, dont la mesure XA entre dans le calcul des deux résidus, est défectueux.

Ce cas simple permet d'illustrer clairement comment le fait que les estimateurs prennent en entrée des sous-ensembles différents des mesures, notamment pour l'évaluation d'une même grandeur physique, permet de déterminer, en fonction des résidus, qu'il existe une panne sur au moins un des capteurs. En toute rigueur, on pourrait déduire de résidus R1 et R3 élevés que les capteurs B et C, voire A, B et C sont défectueux, bien que des pannes simultanées soient moins probables qu'une panne simple sur le premier capteur A. Néanmoins, le fait de multiplier les capteurs et les estimateurs, par rapport au présent mode de réalisation, permet d'établir plus finement le lien entre un résidu dépassant un seuil et la localisation d'une panne sur un des capteurs.

Ainsi, dans le cas réel d'un moteur-fusée dont les conditions de vol sont surveillées par une cinquantaine de capteurs, mesurant certaines grandeurs parmi celles listées précédemment, le présent procédé permet de réduire le nombre de capteurs matériels à une trentaine, les autres capteurs étant remplacés par un ou plusieurs estimateurs sans que cela ne dégrade la détection de panne, et donc la fiabilité et la précision globales du système. Il s'ensuit un gain significatif de masse et de coût, sans perte de performance.

Dans ce qui précède, le critère décrit pour identifier une panne sur un capteur était le fait qu'un résidu dépasse un seuil. Toutefois, d'autres critères sont possibles, par exemple une variation importante du résidu au cours du temps, etc. Plus généralement, une fonction de transfert de détermination 40 prend en entrée les résidus et détermine qu'il existe une panne sur au moins un des capteurs en fonction des résidus calculés sur la base de données obtenues à partir de mesures renvoyées par ledit capteur.

Comme indiqué précédemment, la fonction de transfert de détermination 40 peut comprendre au moins un RNA prenant en entrée les résidus et configuré pour renvoyer, pour au moins un des capteurs, un indicateur de l'existence et optionnellement de la gravité d'une panne sur ledit capteur. En cas de pluralité de RNA, chaque RNA peut être configuré pour identifier une panne sur un capteur en particulier. Un exemple d'apprentissage du RNA sera décrit ci-après.

Alternativement, la fonction de transfert de détermination 40 peut être une fonction déterminée analytiquement ou numériquement, par exemple une matrice prenant en entrée un vecteur de résidus et retournant un vecteur d'indicateurs.

La détermination 40 peut fournir l'indication de panne sous la forme d'un ou plusieurs indicateurs, ou d'un vecteur d'indicateurs 50. Par exemple, en référence au présent mode de réalisation, l'indicateur 50 peut être un nombre à trois chiffres, chaque chiffre correspondant à un capteur. Par exemple, un indicateur valant 010 indique une panne légère sur le deuxième capteur B et aucune panne sur les deux autres capteurs, tandis qu'un indicateur valant 200 indique une panne lourde sur le premier capteur A et aucune panne sur les deux autres capteurs. Les indicateurs peuvent être numériques, comme dans le présente exemple, ou prendre toute autre forme souhaitée (un signal, un caractère alphabétique, une forme, une couleur, etc.).

Optionnellement, les données XA à XE et l'indicateur 50 peuvent être pris comme entrées par un synthétiseur 60 qui en effectue la synthèse afin de tenir compte des pannes traduites par l'indicateur 50 pour améliorer l'estimation des grandeurs physiques Y1 à Y3.

Dans ce mode de réalisation, le synthétiseur 60 est configuré pour produire d'une estimation d'une grandeur physique, par exemple Y1, à partir du premier capteur A mesurant ladite grandeur physique et du premier estimateur D déterminant une estimation de ladite grandeur physique, en ignorant les capteurs défectueux pour lesquels l'existence d'une panne a été déterminée, et les estimateurs prenant en entrée des mesures renvoyées par lesdits capteurs défectueux. Ainsi, si l'indicateur 50 indique qu'une panne a été détectée sur le premier capteur A, alors le synthétiseur 60 pourra ignorer la mesure XA et renvoyer comme estimation de la grandeur Y1 l'estimation XD.

Si l'indicateur 50 indique qu'une panne a été détectée sur le deuxième capteur B, alors il est probable que l'estimation XD, déterminée par le premier estimateur D à partir de la mesure XB, soit mauvaise ; alors, le synthétiseur 60 pourra ignorer l'estimation XD et renvoyer comme estimation de la grandeur Y1 la mesure XA.

Enfin, si l'indicateur 50 indique qu'aucune panne n'a été détectée, ou qu'une panne a été détectée sur le troisième capteur C dont la mesure XC n'affecte pas l'estimation de la première grandeur Y1, alors le synthétiseur 60 pourra prendre en compte à la fois la mesure XA et l'estimation XD pour fournir une estimation de la première grandeur Y1. Par exemple, le synthétiseur 60 peut effectuer une moyenne entre XA et XD. D'autres combinaisons sont possibles, selon le choix de l'homme du métier. Par ailleurs, les données peuvent être pondérées dans la production de l'estimation, par exemple en fonction du degré de panne et/ou du niveau de précision associé à chaque capteur/estimateur.

Un procédé d'apprentissage d'un réseau de neurones artificiels pour un système de détermination de panne pour un ensemble de capteurs est maintenant décrit, selon un mode de réalisation, en référence à la figure 2. Un tel RNA peut être employé pour la détermination 40 présentée précédemment.

Le procédé d'apprentissage comprend une étape S70 d'obtention de données représentant une pluralité de mesures renvoyées respectivement par les capteurs. Les capteurs peuvent être les capteurs A, B, C décrits précédemment. Il est préférable que les capteurs soient les mêmes que ceux sur lesquels le RNA sera amené à déterminer des pannes, afin de tenir compte de leurs défauts propres.

Les données peuvent comprendre directement des mesures XA, XB, XC renvoyées par les capteurs A, B, C, par exemple lors d'essais du système ou d'enregistrements lors de missions précédentes, comme illustré sur la figure 2, et/ou des données simulées reproduisant des mesures renvoyées par les capteurs. Par la suite, on parlera dans les deux cas de mesures par souci de concision, que celles-ci soient acquises, simulées ou obtenues d'une autre manière.

Ces données sont transmises à l'étape S72 de génération de défauts sur les mesures. Dans cette étape, par exemple, on réplique les données obtenues à l'étape S70 et, sur chaque exemplaire, on génère un défaut connu d'amplitude donnée sur un ou plusieurs capteurs donnés. Le choix de l'amplitude du défaut et/ou des capteurs concernés peut être aléatoire, de façon à couvrir rapidement un grand nombre de défauts sur un grand nombre de capteurs. Les défauts peuvent viser un seul capteur ou une combinaison de capteurs, afin de simuler des pannes simultanées.

Ainsi, à partir des mesures XA, XB, XC, on peut générer par exemple deux exemplaires avec défauts : XA', XB, XC, avec un défaut léger sur le premier capteur A, et XA, XB", XC', avec un défaut grave sur le deuxième capteur B et un défaut léger sur le troisième capteur C.

Les exemplaires des données, après génération des défauts, sont transmis aux estimateurs D, E qui, pour chaque exemplaire de données, déterminent les estimations des grandeurs sur la base des mesures éventuellement faussées. Les estimations sont ensuite adjointes aux données représentatives de mesures à partir desquelles elles ont été déterminées, pour former des données complètes. Ainsi, sur la base de l'exemple qui précède et des estimateurs D, E décrits précédemment, on génère trois jeux de données : (XA, XB, XC, XD, XE), (XA', XB, XC, XD, XE'), (XA, XB", XC', XD", XE). Le premier jeu de données représente un fonctionnement normal du système, où tous les capteurs fonctionnement normalement : on s'attend donc à ce que les estimateurs déterminent des estimations correctes. Dans le deuxième jeu de données, on s'attend à ce qu'un défaut léger affecte l'estimation XE', en raison du défaut léger introduit sur la mesure XA' prise en entrée par le deuxième estimateur E. Si le deuxième estimateur E n'est pas linéaire, le défaut peut bien entendu être amplifié ou amoindri. De même, mais indépendamment, dans le troisième jeu de données, on s'attend à ce qu'un défaut grave affecte l'estimation XD", en raison du défaut grave introduit sur la mesure XB" prise en entrée par le premier estimateur D. Le défaut léger sur la mesure XC' n'affecte aucun estimateur, dans cet exemple.

Les données, comprenant les mesures avec défauts générées à l'étape S72 et les estimations avec défauts déterminées à l'étape S74, permettent ensuite de calculer des résidus à l'étape S76. Les résidus sont calculés comme décrit précédemment, pour chaque jeu de données. On obtient ainsi, dans l'exemple précédent, trois jeux de résidus (R1, R3), (R1', R3'), (R1", R3").

Parallèlement, à l'étape S78, indépendamment des estimations et des résidus, on génère des indicateurs de panne sur les capteurs, correspondant aux défauts générés sur les mesures à l'étape S72. En effet, les défauts étant connus, il est possible de caractériser la panne éventuelle sur chaque capteur avec le format que l'on souhaite que le RNA fournisse en sortie.

Par exemple, avec des indicateurs numériques à trois chiffres tels que décrits précédemment, le premier jeu de données correspondrait à un indicateur 000 (aucune panne sur aucun capteur), le deuxième jeu de données à un indicateur 100 (défaut léger sur le premier capteur A, aucun sur les autres capteurs) et le troisième jeu de données à un indicateur 021 (aucun défaut sur le premier capteur A, défaut grave sur le deuxième capteur B, défaut léger sur le troisième capteur C).

En particulier, la génération d'un indicateur de panne pour un capteur (par exemple, un chiffre des indicateurs précités) peut comprendre la comparaison du défaut correspondant avec un seuil associé au capteur renvoyant la mesure considérée, et l'émission d'un niveau de gravité de panne pour ledit capteur sur la base de ladite comparaison. Dans l'exemple ci-dessus, le niveau de gravité vaut 1 si le défaut est d'amplitude comprise entre 2% et 5%, et vaut 2 si le défaut est d'amplitude supérieure à 5%. Si le défaut est d'amplitude inférieure à 2%, on considère qu'il n'y a pas de panne (le niveau de gravité vaut 0, ce qui est aussi un indicateur d'absence de panne).

Bien entendu, ces seuils sont illustratifs et peuvent être modifiés, en nombre et en valeur, selon la précision et la fiabilité des capteurs considérés, et ce pour chaque capteur, indépendamment. Typiquement, au lieu des deux seuils précédemment décrits, on peut prévoir un seul seuil (présence ou absence de panne) ou bien trois seuils ou plus.

Ensuite, à l'étape S80 est réalisé l'apprentissage du RNA en prenant comme entrée les résidus, calculés à l'étape S76, et comme cible de sortie les indicateurs de panne, générés à l'étape S78. Sur cette base, l'apprentissage être réalisé de manière classique afin de rendre le RNA capable, comme illustré sur la figure 1, de renvoyer des indicateurs 50 en ayant pris comme entrée les résidus calculés au bloc fonctionnel 30 : pour chaque jeu de données, itérativement, le RNA prend en entrée les résidus, estime au moins un indicateur et corrige ses poids internes en fonction de la comparaison entre l'indicateur estimé et l'indicateur fourni comme cible de sortie.

A nouveau, l'exemple décrit ci-dessus s'est basé sur un nombre réduit de jeux de données pour clarifier l'illustration, mais l'apprentissage du RNA sera d'autant plus fin que les jeux de données permettent de mailler finement le domaine de fonctionnement du système et les défauts susceptibles de se produire.

Bien que la présente description se réfère à des exemples de réalisation spécifiques, des modifications peuvent être apportées à ces exemples sans sortir de la portée générale de l'invention telle que définie par les revendications.

**Revendications**

1.  Procédé de détermination de panne pour un ensemble (10) de capteurs (A, B, C), comprenant:

    - l'obtention de données, lesdites données comprenant une pluralité de mesures renvoyées respectivement par les capteurs (A, B, C) et une pluralité d'estimations déterminées respectivement par une pluralité d'estimateurs (D, E) prenant en entrée des sous-ensembles différents desdites mesures, au moins un des estimateurs (E) comprenant un réseau de neurones artificiels ;
    - le calcul de résidus (30) représentatifs de l'écart entre des données représentant une même grandeur physique, au moins certains des résidus étant représentatifs de l'écart entre une mesure et une estimation, ou entre deux estimations, au moins un des estimateurs (E) qui détermine les estimations comprenant un réseau de neurones artificiels ;
    - la détermination (40) qu'il existe une panne sur au moins un des capteurs (A, B, C) en fonction des résidus calculés sur la base de données obtenues à partir de mesures renvoyées par ledit capteur.

2.  Procédé de détermination de panne selon la revendication 1, dans lequel le calcul de résidus est effectué entre tous les couples de données représentant une même grandeur physique.

3. Procédé de détermination de panne selon l'une quelconque des revendications 1 à 2, dans lequel l'ensemble de capteurs (10) comprend au plus un capteur (A, B, C) par grandeur physique.

4. Procédé de détermination de panne selon l'une quelconque des revendications 1 à 3, dans lequel la pluralité d'estimateurs comprend au moins un estimateur (D, E) pour fournir une estimation d'une grandeur physique mesurée par l'un des capteurs (A, C).

5. Procédé de détermination selon l'une quelconque des revendications 1 à 4, dans lequel le réseau de neurones artificiels est configuré pour déterminer une estimation d'une première grandeur physique intervenant en amont d'au moins une deuxième grandeur physique dont la mesure est prise comme entrée par le réseau de neurones artificiels.

6. Procédé de détermination de panne selon l'une quelconque des revendications 1 à 5, dans lequel, dans la détermination (40) qu'il existe une panne, les résidus sont donnés en entrée à au moins un réseau de neurones artificiels configuré pour renvoyer, pour au moins un des capteurs (A, B, C), un indicateur (50) de l'existence et optionnellement de la gravité d'une panne sur ledit capteur.

7. Procédé d'estimation d'une grandeur physique à partir d'un ensemble de capteurs, comprenant la détermination de panne pour ledit ensemble de capteurs selon l'une quelconque des revendications 1 à 6, et la production (60) d'une estimation de la grandeur physique à partir des capteurs (A, B, C) mesurant ladite grandeur physique et des estimateurs (D, E) déterminant une estimation de ladite grandeur physique, en ignorant les capteurs défectueux pour lesquels l'existence d'une panne a été déterminée, et les estimateurs prenant en entrée des mesures renvoyées par lesdits capteurs défectueux.

8. Système de détermination de panne pour un ensemble (10) de capteurs (A, B, C), comprenant :

   - une unité d'obtention de données, configurée pour obtenir des données comprenant une pluralité de mesures renvoyées respectivement par les capteurs (A, B, C) et une pluralité d'estimations déterminées respectivement par une pluralité d'estimateurs (D, E) prenant en entrée des sous-ensembles différents desdites mesures, au moins un des estimateurs (E) comprenant un réseau de neurones artificiels ;
   - une unité de calcul de résidus (30) représentatifs de l'écart entre des données représentant une même grandeur physique, au moins certains des résidus étant représentatifs de l'écart entre une mesure et une estimation, ou entre deux estimations, au moins un des estimateurs (E) qui détermine les estimations comprenant un réseau de neurones artificiels **1**
   - une unité de détermination (40) configurée pour déterminer qu'il existe une panne sur au moins un des capteurs (A, B, C) en fonction des résidus calculés sur la base de données obtenues à partir de mesures renvoyées par ledit capteur.

9. Procédé d'apprentissage d'un réseau de neurones artificiels pour un système de détermination de panne pour un ensemble (10) de capteurs (A, B, C), comprenant :

   - l'obtention (S70) de données représentant une pluralité de mesures renvoyées respectivement par les capteurs (A, B, C) ;
   - la génération (S72) de défauts sur les mesures ;
   - la génération d'indicateurs de panne (S78) sur les capteurs, correspondant aux défauts ;
   - l'adjonction (S74), aux données, d'une pluralité d'estimations déterminées respectivement par une pluralité d'estimateurs (D, E) prenant en entrée des sous-ensembles différents des mesures, après génération des défauts, au moins un des estimateurs (E) comprenant un réseau de neurones artificiels ;
   - le calcul (S76) de résidus représentatifs de l'écart entre des données représentant une même grandeur physique ;
   - l'apprentissage (S80) du réseau de neurones artificiels en prenant comme entrée les résidus et comme cible de sortie les indicateurs de panne.

10. Procédé d'apprentissage selon la revendication 9, dans lequel la génération d'un indicateur de panne (S78) comprend la comparaison du défaut correspondant avec un seuil associé au capteur renvoyant la mesure considérée, et l'émission d'un niveau de gravité de panne pour ledit capteur sur la base de ladite comparaison.

**Patentansprüche**

1. Verfahren zur Bestimmung eines Fehlers für einen Satz (10) von Sensoren (A, B, C), umfassend:

   - Erlangen von Daten, die Daten umfassend eine Vielzahl von Messungen, die jeweils von den Sensoren (A, B, C) zurückgegeben werden, und eine Vielzahl von Schätzungen, die jeweils von einer Vielzahl von Schätzern (D, E) bestimmt werden, die unterschiedliche Teilsätze der Messungen als Eingang nehmen, mindestens einer der Schätzer (E) umfassend ein künstliches neuronales Netz;
   - Berechnen von Resten (30), die repräsentativ für die Abweichung zwischen Daten sind, die eine gleiche physikalische Größe darstellen, wobei zumindest einige der Reste repräsentativ für die Abweichung zwischen einer Messung und einer Schätzung oder zwischen zwei Schätzungen sind, zumindest einer der Schätzer (E), der die Schätzungen bestimmt, umfassend ein künstliches neuronales Netz;
   - Bestimmen (40), dass es bei mindestens einem der Sensoren (A, B, C) einen Fehler gibt, basierend auf den Resten, die basierend auf Daten berechnet werden, die anhand von Messungen erlangt werden, die von dem Sensor zurückgegeben werden.

2. Verfahren zur Bestimmung von Ausfällen nach Anspruch 1, wobei das Berechnen von Resten zwischen allen Datenpaaren, die eine gleiche physikalische Größe darstellen, durchgeführt wird.

3. Verfahren zur Bestimmung eines Fehlers nach einem der Ansprüche 1 bis 2, wobei der Satz von Sensoren (10) höchstens einen Sensor (A, B, C) pro physikalischer Größe umfasst.

4. Verfahren zur Bestimmung eines Fehlers nach einem der Ansprüche 1 bis 3, wobei die Vielzahl von Schätzern mindestens einen Schätzer (D, E) zum Bereitstellen einer Schätzung einer physikalischen Größe umfasst, die von einem der Sensoren (A, C) gemessen wird.

5. Bestimmungsverfahren nach einem der Ansprüche 1 bis 4, wobei das künstliche neuronale Netz konfiguriert ist, um eine Schätzung einer ersten physikalischen Größe zu bestimmen, die stromaufwärts von mindestens einer zweiten physikalischen Größe auftritt, deren Messung als Eingang in das künstliche neuronale Netz genommen wird.

6. Verfahren zur Bestimmung eines Fehlers nach einem der Ansprüche 1 bis 5, wobei bei Bestimmen (40), dass es einen Fehler gibt, die Reste in mindestens ein künstliches neuronales Netz eingegeben werden, das konfiguriert ist, um für mindestens einen der Sensoren (A, B, C) einen Indikator (50) für das Vorhandensein und optional für die Schwere eines Fehlers an dem Sensor zurückzugeben.

7. Verfahren zum Schätzen einer physikalischen Größe anhand eines Satzes von Sensoren, umfassend das Bestimmen eines Fehlers für den Satz von Sensoren nach einem der Ansprüche 1 bis 6 und das Erzeugen (60) einer Schätzung der physikalischen Größe anhand der Sensoren (A, B, C), die die physikalische Größe messen, und Schätzer (D, E), die eine Schätzung der physikalischen Größe bestimmen, wobei defekte Sensoren, für die das Vorhandensein eines Fehlers bestimmt wurde, und die Schätzer Messungen eingeben, die von den defekten Sensoren zurückgegeben werden, ignoriert werden.

8. System zur Bestimmung eines Fehlers für einen Satz (10) von Sensoren (A, B, C), umfassend:

   - eine Datenerlangungseinheit, die konfiguriert ist, um Daten zu erlangen, die eine Vielzahl von Messungen, die jeweils von den Sensoren (A, B, C) zurückgegeben werden, und eine Vielzahl von Schätzungen umfassen, die jeweils von einer Vielzahl von Schätzern (D, E) bestimmt werden, die unterschiedliche Teilsätze der Messungen als Eingang nehmen, mindestens einer der Schätzer (E) umfassend ein künstliches neuronales Netz;
   - eine Berechnungseinheit von Resten (30), die repräsentativ für die Abweichung zwischen Daten sind, die eine gleiche physikalische Größe darstellen, wobei zumindest einige der Reste repräsentativ für die Abweichung zwischen einer Messung und einer Schätzung oder zwischen zwei Schätzungen sind, zumindest einer der Schätzer (E), der die Schätzungen bestimmt, umfassend ein künstliches neuronales Netz;
   - eine Bestimmungseinheit (40), die konfiguriert ist, um zu bestimmen, dass es bei mindestens einem der Sensoren (A, B, C) einen Fehler gibt, basierend auf den Resten, die basierend auf Daten berechnet werden, die anhand von Messungen erlangt werden, die von dem Sensor zurückgegeben werden.

9. Verfahren zum Trainieren eines künstlichen neuronalen Netzes für ein System zur Bestimmung eines Fehlers für einen Satz (10) von Sensoren (A, B, C), umfassend:

- Erlangen (S70) von Daten, die eine Vielzahl von Messungen darstellen, die jeweils von den Sensoren (A, B, C) zurückgegeben werden;
- Erzeugen (S72) von Störungen in den Messungen;
- Erzeugen von Fehlerindikatoren (S78) an den Sensoren, die den Störungen entsprechen;
- Hinzufügen (S74), zu den Daten, einer Vielzahl von Schätzungen, die jeweils durch eine Vielzahl von Schätzern (D, E) bestimmt werden, die unterschiedliche Teilsätze von Messungen als Eingang nehmen, nach Erzeugen der Störungen, mindestens einer der Schätzer (E) umfassend ein künstliches neuronales Netz;
- Berechnen (S76) von Resten, die repräsentativ für die Abweichung zwischen Daten sind, die eine gleiche physikalische Größe darstellen;
- Trainieren (S80) des künstlichen neuronalen Netzes, wobei als Eingang die Reste und als Ausgangsziel die Fehlerindikatoren verwendet werden.

**10.** Lernverfahren nach Anspruch 9, wobei das Erzeugen eines Fehlerindikators (S78) den Vergleich der entsprechenden Störung mit einem Schwellenwert, der mit dem Sensor assoziiert ist, der die jeweilige Messung zurückgibt, und die Ausgabe eines Fehlerschweregrads für den Sensor basierend auf dem Vergleich umfasst.

## Claims

**1.** A method for determining a fault for a set of sensors (10), comprising:

- obtaining data, said data comprising a plurality of measurements returned respectively by the sensors (A, B, C) and a plurality of estimates determined respectively by a plurality of estimators (D, E) taking as input different subsets of said measurements, at least one of the estimators (E) comprising an artificial neural network;
- calculating residuals (30) representative of the deviation between data representing a same physical quantity, wherein at least some of the residuals are representative of the deviation between a measurement and an estimate, or between two estimates, at least one of the estimators (E) that determines the estimates comprising an artificial neural network;
- determining (40) that there is a fault on at least one of the sensors (A, B, C) as a function of the residuals calculated based on data obtained from measurements returned by said sensor.

**2.** The fault determination method according to claim 1, wherein the calculation of residuals is performed between all the pairs of data representing the same physical quantity.

**3.** The fault determination method according to any one of claims 1 to 2, wherein the set of sensors (10) comprises at most one sensor (A, B, C) per physical quantity.

**4.** The fault determination method according to any one of claims 1 to 3, wherein the plurality of estimators comprises at least one estimator (D, E) to provide an estimate of a physical quantity measured by one of the sensors (A, C).

**5.** The fault determination method according to any one of claims 1 to 4, wherein the artificial neural network is configured to determine an estimate of a first physical quantity occurring upstream of at least one second physical quantity whose measurement is taken as input by the artificial neural network.

**6.** The fault determination method according to any one of claims 1 to 5, wherein, in the determination (40) that a fault exists, the residuals are given as input to at least one artificial neural network configured to return, for at least one of the sensors (A, B, C), an indicator (50) of the existence and optionally of the severity of a fault on said sensor.

**7.** A method for estimating a physical quantity from a set of sensors, comprising the fault determination for said set of sensors according to any one of claims 1 to 6, and the production (60) of an estimate of the physical quantity from the sensors (A, B, C) measuring said physical quantity and the estimators (D, E) determining an estimate of said physical quantity, while ignoring the defective sensors for which the existence of a fault has been determined, and the estimators taking as input measurements returned by said defective sensors.

**8.** A fault determination system for a set (10) of sensors (A, B, C), comprising:

- a data obtaining unit, configured to obtain data comprising a plurality of measurements returned respectively by the sensors (A, B, C) and a plurality of estimates determined respectively by a plurality of estimators (D, E) taking as input different subsets of said measurements, at least one of the estimators (E) comprising an artificial neural network;

- a unit for calculating residuals (30) representative of the deviation between data representing a same physical quantity, wherein at least some of the residuals are representative of the deviation between a measurement and an estimate, or between two estimates, at least one of the estimators (E) that determines the estimates comprising an artificial neural network;

- a determination unit (40) configured to determine that there is a fault on at least one of the sensors (A, B, C) as a function of the residuals calculated based on data obtained from measurements returned by said sensor.

9. A method for training an artificial neural network (40) for a fault determination system for a set of sensors (A, B, C), comprising:

- obtaining (S70) data representing a plurality of measurements returned respectively by the sensors (A, B, C);
- generating (S72) defects on the measurements;
- generating fault indicators (S78) on the sensors, corresponding to the defects;
- adding (S74), to the data, a plurality of estimates determined respectively by a plurality of estimators (D, E) taking as input different subsets of the measurements, after generation of the defects, wherein at least one of the estimators (E) comprises an artificial neural network;
- calculating (S76) residuals representative of the deviation between data representing a same physical quantity;
- training (S80) the artificial neural network (40) taking as input the residuals and as output target the fault indicators.

10. The training method according to claim 9, wherein the generation of a fault indicator (S78) comprises the comparison of the corresponding defect with a threshold associated with the sensor returning the measurement considered, and the emission of a fault severity level for said sensor based on said comparison.

[Fig. 1]

[Fig. 2]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015233730 A

- FR 3013834